(19) Europäisches Patentamt
European Patent Office
Office européen des brevets

(11) **EP 4 270 807 A1**

(12) **EUROPEAN PATENT APPLICATION**

(43) Date of publication:
**01.11.2023 Bulletin 2023/44**

(21) Application number: **22214543.5**

(22) Date of filing: **19.12.2022**

(51) International Patent Classification (IPC):
**H04B 7/024** *(2017.01)* **H04B 7/0417** *(2017.01)*
**H04B 7/06** *(2006.01)* **H04B 7/0404** *(2017.01)*

(52) Cooperative Patent Classification (CPC):
**H04B 7/024; H04B 7/0404; H04B 7/0421;**
**H04B 7/0639; H04B 7/06968**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.04.2022 KR 20220053492**

(71) Applicant: **LG Electronics, Inc.**
**Yeongdeungpo-gu**
**Seoul 07336 (KR)**

(72) Inventors:
• **CHUNG, Jaehoon**
  **06772 Seoul (KR)**
• **KANG, Jiwon**
  **06772 Seoul (KR)**
• **KIM, Hyungtae**
  **06772 Seoul (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **METHOD AND APPARATUS FOR PERFORMING TRANSMISSION AND RECEPTION BASED ON SPATIAL PARAMETER IN WIRELESS COMMUNICATION SYSTEM**

(57) A method and an apparatus for performing transmission and reception based on a spatial parameter in a wireless communication system are disclosed. A method performed by a user equipment (UE) in a wireless communication system according to an embodiment of the present disclosure may comprise: receiving configuration information for a unified transmission configuration indicator (TCI) scheme; receiving information indicating a plurality of TCI states based on the unified TCI scheme; and performing uplink transmission or downlink reception based on at least one TCI state among the plurality of TCI states. The at least one TCI state may be determined based on at least one of a pre-defined rule or indication information related to application of the plurality of TCI states.

FIG.8

**Description**

Technical Field

The present disclosure relates to a wireless communication system, and more particularly, to a method and apparatus for performing transmission and reception based on a spatial parameter in a wireless communication system.

BACKGROUND

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

SUMMARY

A technical object of the present disclosure is to provide a method and an apparatus for performing transmission and reception based on a spatial parameter in a wireless communication system.

In addition, an additional technical object of the present disclosure is, in relation to downlink transmission and reception, to provide a method and an apparatus for applying a plurality of spatial parameters to a channel/signal, when the plurality of spatial parameters based on single/multiple transmission and reception point (TRP) are configured/indicated.

The technical objects to be achieved by the present disclosure are not limited to the above-described technical objects, and other technical objects which are not described herein will be clearly understood by those skilled in the pertinent art from the following description.

A method performed by a user equipment in a wireless communication system according to an aspect of the present disclosure may comprise: receiving configuration information for a unified transmission configuration indicator (TCI) scheme; receiving information indicating a plurality of TCI states based on the unified TCI scheme; and performing uplink transmission or downlink reception based on at least one TCI state among the plurality of TCI states. The at least one TCI state may be determined based on at least one of a pre-defined rule or indication information related to application of the plurality of TCI states.

A method performed by a base station in a wireless communication system according to an additional aspect of the present disclosure may comprise: transmitting configuration information for a unified transmission configuration indicator (TCI) scheme; transmitting information indicating a plurality of TCI states based on the unified TCI scheme; and performing uplink reception or downlink transmission based on at least one TCI state among the plurality of TCI states. The at least one TCI state is determined based on at least one of a pre-defined rule or indication information related to application of the plurality of TCI states.

According to an embodiment of the present disclosure, a method and an apparatus for performing transmission and reception based on a spatial parameter in a wireless communication system may be provided.

In addition, according to an embodiment of the present disclosure, in relation to downlink transmission and reception, a method and an apparatus for applying a plurality of spatial parameters to a channel/signal may be provided, when the plurality of spatial parameters based on single/multiple transmission and reception point (TRP) are configured/indicated.

Effects achievable by the present disclosure are not limited to the above-described effects, and other effects which are not described herein may be clearly understood by those skilled in the pertinent art from the following description.

BRIEF DESCRIPTION OF THE DRAWINGS

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a multiple Transmission and Reception Point (TRP) transmission scheme in a wireless communication system to which the present disclosure may be applied.

FIG. 8 is a diagram illustrating an operation of a terminal in a spatial parameter-based transmission/reception method according to an embodiment of the present disclosure.

FIG. 9 is a diagram illustrating an operation of a base station for a spatial parameter-based transmission/reception method according to an embodiment of the present disclosure.

FIG. 10 is a diagram which illustrates a block diagram of a wireless communication device according to an embodiment of the present disclosure.

## DETAILED DESCRIPTION

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

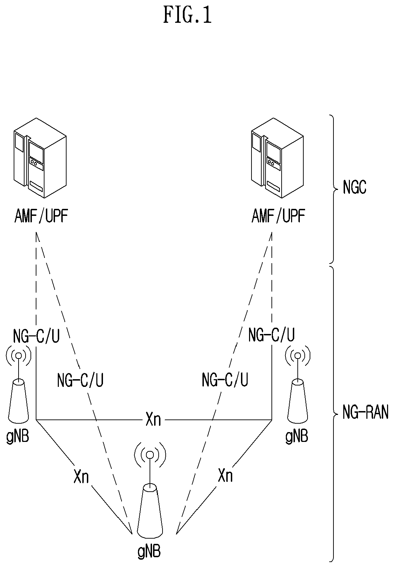

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

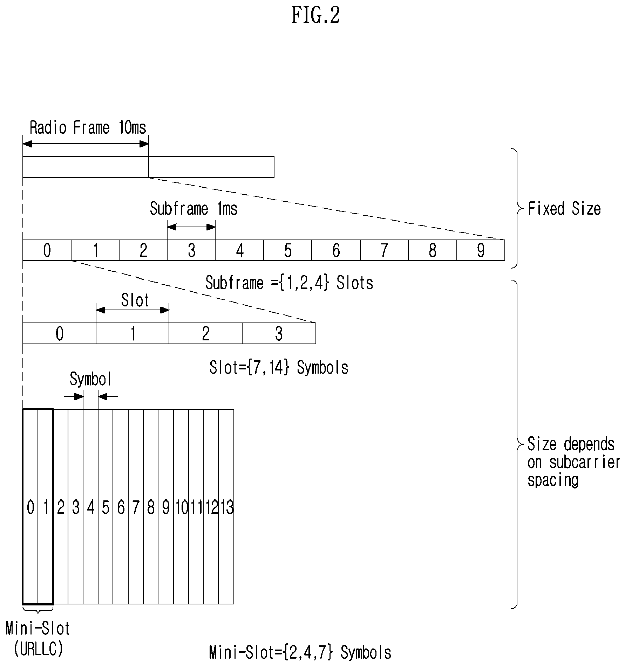

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max} N_f/100) \cdot T_c$=10ms. Here, a radio frame is configured with 10 subframes having a duration of $T_{sf}=(\Delta f_{max} N_f/1000) \cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subfra-me,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subfra-me,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

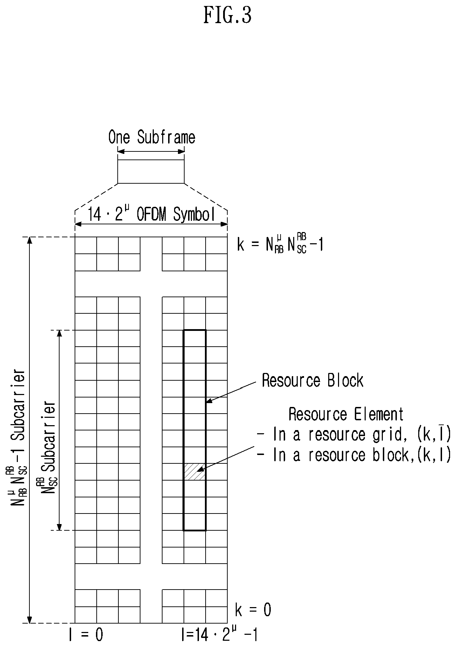

FIG. 3 illustrates a resource grid in a wireless communication system to which the present disclosure may be applied.

In reference to FIG. 3, it is illustratively described that a resource grid is configured with $N_{RB}^{\mu}N_{SC}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{SC}^{RB}$ subcarriers. Here, $N_{RB}^{\mu} \leq N_{RB}^{max,\mu}$. The $N_{RB\text{-}}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{SC}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

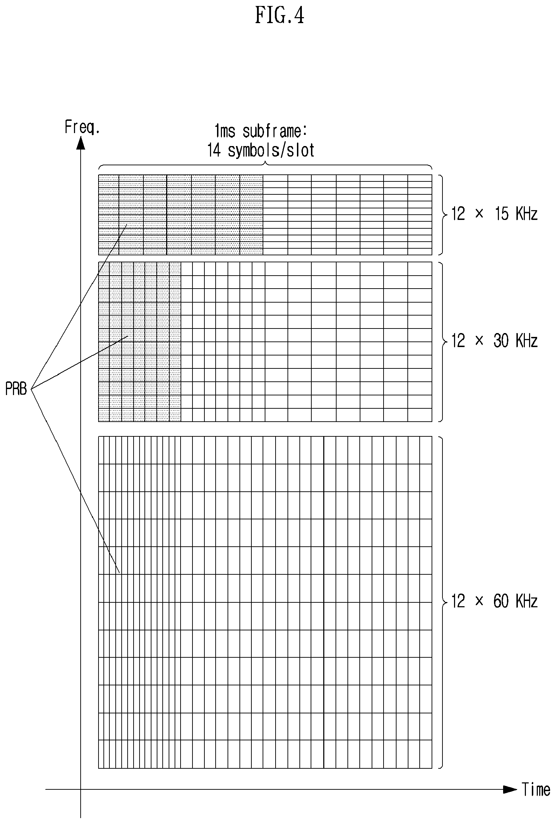

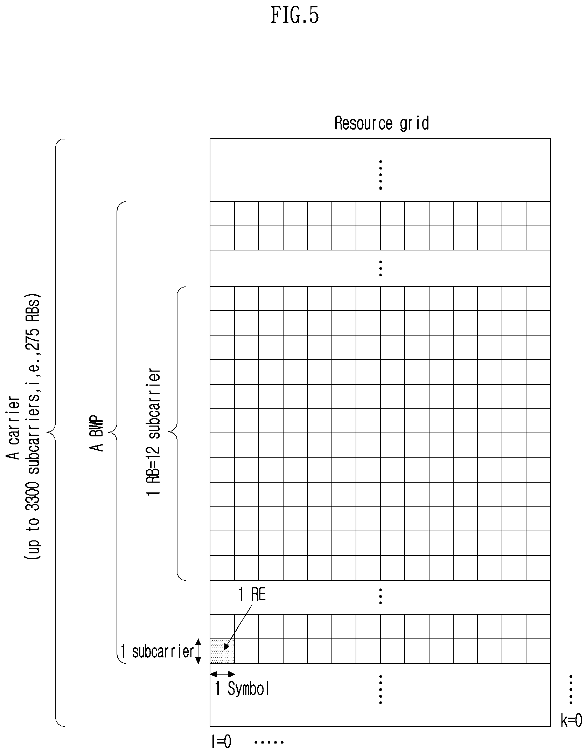

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

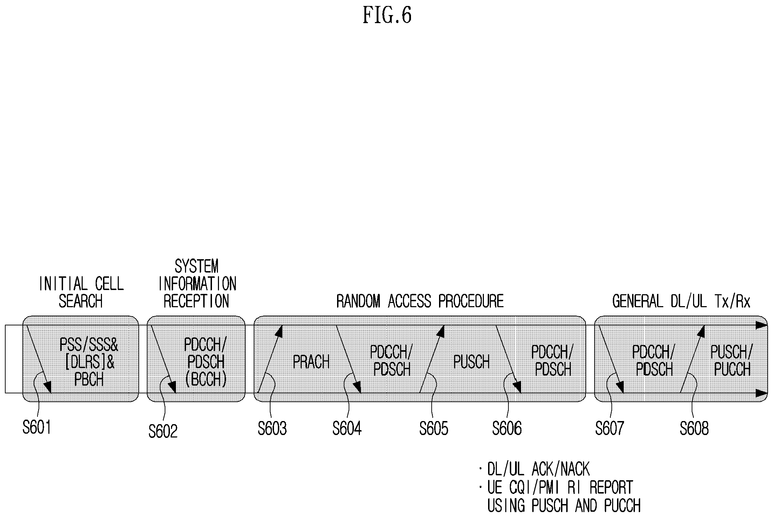

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Ouasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

When HARQ-ACK corresponding to a PDSCH carrying an activation command is transmitted in a slot n, mapping indicated between a TCI state and a codepoint of a DCI field 'Transmission Configuration Indication' may be applied by starting from a slot $n+3N_{slot}^{subframe,\mu}+1$. After UE receives an initial higher layer configuration for TCI states before receiving an activation command, UE may assume for QCL-TypeA, and if applicable, for QCL-TypeD that a DMRS port of a PDSCH of a serving cell is quasi-colocated with a SS/PBCH block determined in an initial access process.

When a higher layer parameter (e.g., tci-PresentInDCI) indicating whether there is a TCI field in DCI configured for UE is set to be enabled for a CORESET scheduling a PDSCH, UE may assume that there is a TCI field in DCI format 1_1 of a PDCCH transmitted in a corresponding CORESET. When tci-PresentInDCI is not configured for a CORESET scheduling a PDSCH or when a PDSCH is scheduled by DCI format 1_0 and a time offset between reception of DL DCI and a corresponding PDSCH is equal to or greater than a predetermined threshold (e.g., timeDurationForQCL), in order to determine a PDSCH antenna port QCL, UE may assume that a TCI state or a QCL assumption for a PDSCH is the same as a TCI state or a QCL assumption applied to a CORESET used for PDCCH transmission. Here, the predetermined threshold may be based on reported UE capability.

When a parameter tci-PresentInDCI is set to be enabled, a TCI field in DCI in a scheduling CC (component carrier) may indicate an activated TCI state of a scheduled CC or a DL BWP. When a PDSCH is scheduled by DCI format 1_1, UE may use a TCI-state according to a value of a 'Transmission Configuration Indication' field of a detected PDCCH having DCI to determine a PDSCH antenna port QCL.

When a time offset between reception of DL DCI and a corresponding PDSCH is equal to or greater than a predetermined threshold (e.g., timeDurationForQCL), UE may assume that a DMRS port of a PDSCH of a serving cell is quasi-colocated with RS(s) in a TCI state for QCL type parameter(s) given by an indicated TCI state.

When a single slot PDSCH is configured for UE, an indicated TCI state may be based on an activated TCI state of a slot having a scheduled PDSCH.

When multiple-slot PDSCHs are configured for UE, an indicated TCI state may be based on an activated TCI state of a first slot having a scheduled PDSCH and UE may expect that activated TCI states across slots having a scheduled PDSCH are the same.

When a CORESET associated with a search space set for cross-carrier scheduling is configured for UE, UE may expect that a tci-PresentInDCI parameter is set to be enabled for a corresponding CORESET. When one or more TCI states are configured for a serving cell scheduled by a search space set including QCL-TypeD, UE may expect that a time offset between reception of a PDCCH detected in the search space set and a corresponding PDSCH is equal to or greater than a predetermined threshold (e.g., timeDurationForQCL).

For both of a case in which a parameter tci-PresentInDCI is set to be enabled and a case in which tci-PresentInDCI is not configured in a RRC connected mode, when a time offset between reception of DL DCI and a corresponding PDSCH is less than a predetermined threshold (e.g., timeDurationForQCL), UE may assume that a DMRS port of a PDSCH of a serving cell is quasi-colocated with RS(s) for QCL parameter(s) used for PDCCH QCL indication of a CORESET associated with a monitored search space having the lowest CORESET-ID in the latest slot where one or more CORESETs in an activated BWP of a serving cell is monitored by UE.

In this case, when QCL-TypeD of a PDSCH DMRS is different from QCL-TypeD of a PDCCH DMRS and they are overlapped in at least one symbol, UE may expect that reception of a PDCCH associated with a corresponding CORESET will be prioritized. It may be also applied to intra-band CA (carrier aggregation) (when a PDSCH and a CORESET exist in a different CC). When any of configured TCI states does not include QCL-TypeD, a different QCL assumption may be obtained from TCI states indicated for a scheduled PDSCH, regardless of a time offset between reception of DL DCI and a corresponding PDSCH.

For a periodic CSI-RS resource of configured NZP-CSI-RS-ResourceSet including a higher layer parameter trs-Info, UE may expect a TCI state to indicate one of the following QCL type(s).

- QCL-TypeC with a SS/PBCH block, and if applicable, QCL-TypeD with the same SS/PBCH block, or
- QCL-TypeC with a SS/PBCH block, and if applicable, QCL-TypeD with a CSI-RS resource in configured NZP-CSI-RS-ResourceSet including a higher layer parameter repetition

For an aperiodic CSI-RS resource of configured NZP-CSI-RS-ResourceSet including a higher layer parameter trs-Info, UE may expect a TCI state to indicate QCL-TypeA with a periodic CSI-RS resource of NZP-CSI-RS-ResourceSet including a higher layer parameter trs-Info, and if applicable, QCL-TypeD with the same periodic CSI-RS resource.

For a CSI-RS resource of NZP-CSI-RS-ResourceSet configured without a higher layer parameter trs-Info and without a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a SS/PBCH block, or

    QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
    when QCL-TypeD is not applicable, QCL-TypeB with a CSI-RS resource in configured NZP-CSI-RS-Resource-Set including a higher layer parameter trs-Info.

For a CSI-RS resource of configured NZP-CSI-RS-ResourceSet including a higher layer parameter repetition, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
    QCL-TypeC with a SS/PBCH block, and if applicable, QCL-TypeD with the same SS/PBCH block.

For a DMRS of a PDCCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or

    QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
    QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

For a DMRS of a PDSCH, UE may expect a TCI state to indicate one of the following QCL type(s).

- QCL-TypeA with a CSI-RS resource of configured NZP-CSI-RS-ResourceSet including a higher layer parameter trs-Info, and if applicable, QCL-TypeD with the same CSI-RS resource, or
- QCL-TypeA with a CSI-RS resource of configured NZP-CSI-RS-ResourceSet including a higher layer parameter trs-Info, and if applicable, QCL-TypeD with a CSI-RS resource in configured NZP-CSI-RS-ResourceSet including a higher layer parameter repetition, or
- QCL-TypeA with a CSI-RS resource of NZP-CSI-RS-ResourceSet configured without a higher layer parameter trs-Info and without a higher layer parameter repetition, and if applicable, QCL-TypeD with the same CSI-RS resource.

Multiple TRP (M-TRP) related operation

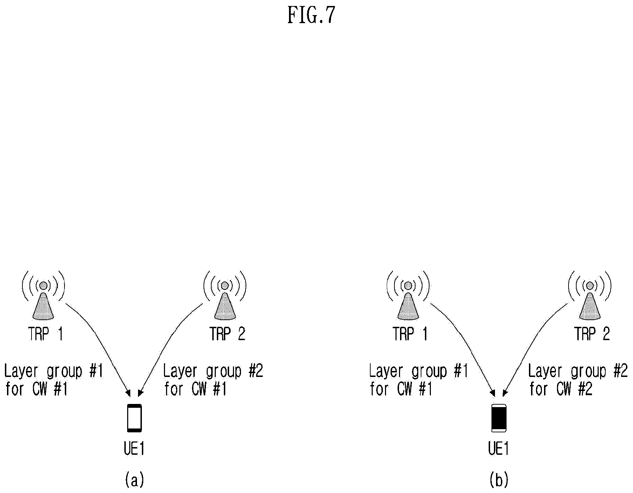

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be extended and applied to a frequency division multiplexing (FDM) method based on different frequency domain resources (e.g., RB/PRB (set), etc.) and/or a time division multiplexing (TDM) method based on different time domain resources (e.g., slots, symbols, sub-symbols, etc.).

Regarding a method for multiple TRPs based URLLC scheduled by single DCI, the following methods are discussed.

1) Method 1 (SDM): Time and frequency resource allocation is overlapped and n (n<=Ns) TCI states in a single slot

1-a) Method 1a.

- The same TB is transmitted in one layer or layer set at each transmission time (occasion) and each layer or each layer set is associated with one TCI and one set of DMRS port(s).
- A single codeword having one RV is used in all spatial layers or all layer sets. With regard to UE, different coded bits are mapped to a different layer or layer set by using the same mapping rule

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

The same TB having one DMRS port associated with multiple TCI state indexes is transmitted in one layer at one transmission time (occasion) or the same TB having multiple DMRS ports one-to-one associated with multiple TCI state indexes is transmitted in one layer.

In case of the above-described method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.

The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the above-described method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at all transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- All transmission time (occasion) across K slots uses a common MCS with a single or multiple DMRS port(s).
- A RV/TCI may be the same or different at a different transmission time (occasion).

Downlink multiple TRP (M-TRP) URLLC transmission operation

DL MTRP URLLC transmission method means that multiple TRPs transmit the same data/DCI by using a different space(e.g., layer, port)/time/frequency resource. For example, TRP 1 transmits the specific data/DCI in resource 1 and TRP 2 transmits the specific data/DCI(i.e., same data/DCI) in resource 2

UE configured with a DL MTRP-URLLC transmission method receives the same data/DCI by using a different layer/time/frequency resource. Here, UE tmay receive an indication of the QCL RS/type (i.e., DL TCI state) used in the space/time/frequency resource for receiving the corresponding data/DCI from the base station.

For example, when the data/DCI is received in resource 1 and resource 2, a DL TCI state used in resource 1 and a DL TCI state used in resource 2 may be indicated. UE may achieve high reliability because it receives the data/DCI through resource 1 and resource 2. Such DL MTRP URLLC may be applied to a PDSCH/a PDCCH.

UL MTRP-URLLC transmission method means that multiple TRPs receive the same data/UCI from any UE by using a different space/time/frequency resource. For example, TRP 1 may receive the same data/DCI from UE in resource 1 and TRP 2 may receive the same data/DCI from UE in resource 2. And, TRP 1 and TRP 2 may share data/UCI received from the UE through a backhaul link (connected between TRPs).

That is, UE configured with a UL MTRP-URLLC transmission method may transmit the same data/UCI by using a different space/time/frequency resource. Here, the UE may be indicated by the base station for a Tx beam and Tx power (i.e., UL TCI state) to be used in space/time/frequency resources for transmitting the same data/UCI. For example, when the same data/UCI is transmitted in resource 1 and resource 2, the UE may be indicated by the base station to indicate the UL TCI state used in resource 1 and the UL TCI state used in resource 2 from the base station. This UL M-TRP URLLC may be applied to PUSCH/PUCCH.

In addition, in describing the present disclosure, when receiving/transmitting data/DCI/UCI through a specific space/time/frequency resource, using (or mapping) a specific TCI state(or TCI) may mean that, for DL, estimating a channel from the DMRS using the QCL type and QCL RS indicated by a specific TCI state in a specific space/time/frequency resource, and receiving/demodulating data/DCI/UCI with the estimated channel.

In addition, when receiving/transmitting data/DCI/UCI through a specific space/time/frequency resource, using (or mapping) a specific TCI state (or, TCI) may mean that, for UL, DMRS and data/UCI are transmitted/modulated using a Tx beam and/or Tx power indicated by a specific TCI state in a specific space/time/frequency resource.

And, the UL TCI state may include Tx beam or Tx power information of the UE. In addition, the base station may configure spatial relation information or the like for the UE through other parameters instead of the TCI state.

For example, the UL TCI state may be directly indicated to the UE through a UL grant DCI. Alternatively, the UL TCI state may mean spatial relationship information of an SRS resource indicated through an SRS resource indicator (SRI) field of a UL grant DCI. Alternatively, the UL TCI state may mean an open loop (OP) Tx power control parameter connected to a value indicated through the SRI field of the UL grant DCI.

Here, the OL Tx power control parameter may include, for example, j (index and alpha for OP parameter(s) Po (maximum 32 parameter values set per cell), $q\_d$ (index of DL RS resources for PL (path loss) measurement (up to 4 measurements per cell), or/and l(closed loop power control process index (up to 2 processes per cell)).

As another embodiment of the present disclosure, the M-TRP eMBB transmission method refers to a method in which M-TRP transmits different data/DCI using different space/time/frequency resources. If the M-TRP eMBB transmission method is configured, it may be assumed that the UE receives a plurality of TCI states from the base station through DCI, and that data received using QCL RSs indicated by each of the plurality of TCI states are different from each other.

In addition, since the RNTI for M-TRP URLLC and the M-TRP eMBB RNTI are separately used, the UE may determine whether a specific transmission/reception is M-TRP URLLC transmission/reception or M-TRP eMBB transmission/reception. For example, when RNTI for URLLC is used and CRC masking is performed for DCI, the UE may determine the corresponding transmission as URLLC transmission. In addition, when the RNTI for eMBB is used and CRC masking is performed for DCI, the UE may determine the corresponding transmission as eMBB transmission. As another example, the base station may configure the M-TRP URLLC transmission/reception method or the M-TRP eMBB transmission/reception method to the UE through new signaling.

For convenience of description of the present disclosure, it has been assumed that 2 TRPs cooperate with each other to perform a transmission/reception operation, but the present disclosure is not limited thereto. That is, the present disclosure may be extended and applied even in a multi-TRP environment of 3 or more, and may be extended and applied even in an environment in which transmission/reception is performed in different panels or beams in the same TRP. The UE may recognize different TRPs as different TCI states. That the UE transmits/receives data/DCI/UCI using TCI state 1 means that it transmits/receives data/DCI/UCI/ from TRP 1 (or to TRP 1).

The present disclosure may be utilized in a situation in which the M-TRP cooperatively transmits the PDCCH (repetitively transmits or divides the same PDCCH). In addition, the present disclosure may be utilized in a situation in which M-TRP cooperatively transmits PDSCH or cooperatively receives PUSCH/PUCCH.

In addition, in describing the present disclosure, repeatedly transmitting the same PDCCH by a plurality of base stations (M-TRP) may mean transmitting the same DCI through a plurality of PDCCH candidates and has the same meaning that multiple base stations repeatedly transmit the same DCI. Here, two DCIs having the same DCI format/size/payload may be viewed as the same DCI.

Alternatively, if the scheduling results are the same even if the payloads of the two DCIs are different, the two DCIs may be regarded as the same DCI. For example, the time domain resource allocation (TDRA) field of DCI may relatively determine the slot/symbol position of data and the slot/symbol position of A(ACK)/N(NACK) based on the reception time of the DCI.

In this case, when the DCI received at time n and the DCI received at time n+1 indicate the same scheduling result to the UE, the TDRA fields of the two DCIs are different, and as a result, the DCI payload is different from each other. Accordingly, even if the payloads of the two DCIs are different, if the scheduling results are the same, the two DCIs may be regarded as the same DCI. Here, the number of repetitions R may be directly indicated by the base station to the UE or mutually promised.

Alternatively, even if the payloads of the two DCIs are different and the scheduling results are not the same, when the scheduling result of one DCI is a subset of the scheduling result of the other DCI, the two DCIs may be regarded as the same DCI.

For example, if the same data is TDM and repeatedly transmitted N times, DCI 1 received before the first data indicates (or schedules) repetition of data N times, and DCI 2 received before the second data indicates repetition (scheduling) of data N-1. In this case, the scheduling result (or data) of DCI 2 becomes a subset of the scheduling result (or data) of DCI 1, and both DCIs have scheduling results for the same data. Accordingly, even in this case, the two DCIs may be regarded as the same DCI.

And, in describing the present disclosure, dividing and transmitting the same PDCCH by a plurality of base stations may mean that one DCI is transmitted through one PDCCH candidate, but TRP 1 transmits some resources defined for the corresponding PDCCH candidate and TRP 2 transmits the remaining resources.

For example, when TRP 1 and TRP 2 divide and transmit PDCCH candidates corresponding to aggregation level m1 + m2, a PDCCH candidate may be divided into PDCCH candidate 1 corresponding to aggregation level m1 and PDCCH candidate 2 corresponding to aggregation level m2, TRP 1 may transmit PDCCH candidate 1, and TPR 2 may transmit PDCCH candidate 2. In this case, TRP 1 and TRP 2 may transmit PDCCH candidate 1 and PDCCH candidate 2 using different time/frequency resources. After receiving the PDCCH candidate 1 and the PDCCH candidate 2, the UE may generate a PDCCH candidate corresponding to the aggregation level m1+m2 and attempt DCI decoding.

In this case, the method in which the same DCI is divided and transmitted to several PDCCH candidates may be implemented in the following two methods.

The first method is a method in which DCI payload (e.g., control information + CRC) is encoded through one channel encoder (e.g., polar encoder) and divided into two TRPs and transmitted. That is, the first method means a method of dividing and transmitting the coded bits obtained according to the encoding result in two TRPs. Here, the entire DCI payload may be encoded in the coded bit transmitted by each TRP, but is not limited thereto, and only some DCI payloads may be encoded.

The second method divides the DCI payload (e.g., control information + CRC) into two DCIs (DCI 1 and DCI 2) and encodes each of them through a channel encoder (e.g., a polar encoder). Thereafter, each of the two TRPs may transmit a coded bit corresponding to DCI 1 and a coded bit corresponding to DCI 2 to the terminal.

That is, dividing/repeating the same PDCCH by a plurality of base stations (M-TRP) and transmitting over a plurality of monitoring occasions (MOs) may mean that 1) the coded bit encoding the entire DCI content of the corresponding PDCCH is repeatedly transmitted through each MO for each base station (S-TRP), 2) the coded bit encoding the entire DCI content of the corresponding PDCCH is divided into a plurality of parts, and each base station (S-TRP) transmits different parts through each MO, or 3) the DCI content of the corresponding PDCCH is divided into a plurality of parts, and different parts are encoded for each base station (S-TRP) (that is, separately encoded) and transmitted through each MO.

Repeatedly/split transmission of the PDCCH may be understood as transmitting the PDCCH multiple times over several transmission occasions (TO).

Here, TO may mean a specific time and/or frequency resource unit in which the PDCCH is transmitted. For example, when the PDCCH is transmitted multiple times (to a specific RB) over slots 1, 2, 3, and 4, TO may mean each slot. As another example, if the PDCCH is transmitted multiple times (in a specific slot) over RB sets 1, 2, 3, and 4, TO may mean each RB set. As another example, if the PDCCH is transmitted multiple times over different times and frequencies, TO may mean each time/frequency resource. In addition, the TCI state used for DMRS channel estimation may be set differently for each TO, and it may be assumed that the TOs in which the TCI state is set differently are transmitted by different TRPs/panels.

Repeatedly transmitting or dividing the PDCCH by a plurality of base stations may mean that the PDCCH is transmitted over multiple TOs, and the union of the TCI states configured in the corresponding TOs consists of two or more TCI states. For example, PDCCH transmitting over TO 1,2,3,4 may mean that TCI states 1,2,3,4 are configured in each of TO 1,2,3,4 and TRP i cooperatively transmits the PDCCH in TO i.

In describing the present disclosure, repeatedly transmitting the same PUSCH to a plurality of base stations (i.e., M-TRP) by the UE may mean that the UE transmits the same data through a plurality of PUSCHs, and each PUSCH may be transmitted by being optimized for UL channels of different TRPs.

For example, the UE may repeatedly transmit the same data through PUSCH 1 and PUSCH 2. In this case, PUSCH 1 may be transmitted using UL TCI state 1 for TRP 1, and link adaptation such as precoder/MCS may also be scheduled to receive a value optimized for the channel of TRP 1 to transmit the PUSCH. PUSCH 2 is transmitted using UL TCI state 2 for TRP 2, and link adaptation such as a precoder/MCS may also be scheduled for a value optimized for the channel of TRP 2 to transmit the PUSCH. In this case, the repeatedly transmitted PUSCH 1 and PUSCH 2 may be transmitted at different times to be TDM, FDM, or SDM.

In addition, in describing the present disclosure, transmitting, by UE to a plurality of base stations (i.e., M-TRP), the same PUSCH by dividing it may mean that one data is transmitted through one PUSCH, but the resources allocated to the PUSCH are divided and optimized for UL channels of different TRPs for transmission.

For example, the UE may transmit the same data through a 10-symbol PUSCH. At this time, the first 5 symbols among 10 symbols may be transmitted using UL TCI state 1 for TRP 1, and the UE may transmit a 5-symbol PUSCH (to TRP 1) by receiving a link adaptation such as precoder/MCS and scheduling a value optimized for a channel of TRP 1. The remaining 5 symbols may be transmitted using UL TCI state 2 for TRP 2, and the UE may transmit the remaining 5-symbol PUSCH (with TRP 2) by receiving a link adaptation such as precoder/MCS and scheduling a value optimized for the channel of TRP 2.

In the above example, a method of dividing one PUSCH into time resources and performing TDM transmission for TRP 1 and TRP 2 has been described. However, the present disclosure is not limited thereto, and the UE may divide and transmit the same PUSCH to a plurality of base stations by using the FDM/SDM method.

The UE may repeatedly transmit the PUCCH to a plurality of base stations (similar to PUSCH transmission) or divide and transmit the same PUCCH.

And, when a plurality of TOs are indicated for the terminal in order to repeatedly transmit PDCCH/PDSCH/PUSCH/PUCCH or divide and transmit PDCCH/PDSCH/PUSCH/PUCCH, for each TO, UL may be transmitted toward a specific TRP, or DL may be received from a specific TRP. At this time, the UL TO (or the TO of TRP 1) transmitted toward TRP 1 may mean a TO using a first value of two spatial relations, two UL TCIs, two UL power control parameters or two pathloss (PL)-RS indicated to the terminal. And, UL TO (or TO of TRP 2) transmitted toward TRP 2 may mean a TO using a second value of two spatial relations, two UL TCIs, two UL power control parameters, or two PL-RSs indicated to the UE.

Similarly, in the case of DL transmission, the DL TO transmitted by TRP 1 (or TO of TRP 1) may mean a TO using a first value of two DL TCI states indicated to the terminal (e.g., when two TCI states are set in CORESET), and the DL TO transmitted by TRP 2 (or TO of TRP 2) may mean a TO using a second value of two DL TCI states indicated to the terminal (e.g., two TCI states are set in CORESET).

The present disclosure may be extended and applied to various channels such as PUSCH/PUCCH/PDSCH/PDCCH. In addition, the present disclosure may be extended and applied to both the case of repeatedly transmitting the channel and the case of dividing and transmitting the channel in different space/time/frequency resources.

In addition, in terms of the DCI transmission, the M-TRP transmission scheme may be devided into i) a multiple DCI (M-DCI)-based M-TRP transmission scheme in which each TRP transmits a different DCI, and ii) a single DCI (S-DCI)-based M-TRP transmission scheme in which one TRP transmits a DCI. For example, in the case of S-DCI, since all scheduling information for data transmitted by the M-TRP need to be transferred through one DCI, it may be used in an ideal BackHaul (ideal BH) environment where dynamic cooperation between two TRPs is possible.

Related to enhanced M-TRP transmission and reception

With respect to M-TRP transmission/reception in Rel-16 NR standardization, PDSCH transmission/reception according to the S-DCI based M-TRP transmission scheme and the M-DCI based M-TRP transmission scheme is supported.

First, an S-DCI based M-TRP PDSCH transmission scheme will be described.

One of SDM/FDM/TDM schemes may be used for S-DCI based M-TRP PDSCH transmission. In the case of SDM, the base station transmits one TB using a multi-layer, but transmits layers belonging to different DMRS CDM groups with different Tx beams (i.e., QCL RS or TCI state). Through this, the transmission capacity may be improved by increasing the number of layers compared to the existing S-TRP transmission scheme. In addition, when one TB is transmitted using multiple layers, some layers are transmitted to TRP 1 and the other layers are transmitted to TRP 2, whereby channel reliability due to diversity gain may be improved.

In the case of FDM, scheme 2a and 2b are supported. Here, scheme 2a is a scheme in which one TB is transmitted using a multi-RB, but RBs belonging to different RB groups are transmitted using different Tx beams (i.e., QCL RS or TCI state). Scheme 2b is a scheme for transmittting the same TB using different RB groups, but transmitting RBs belonging to different RB groups using different Tx beams (i.e., QCL RS or TCI state). In the case of TDM, schemes 3 and 4, are supported. Here, scheme 4 (i.e., inter-slot TDM) is a scheme for repeatedly transmitting the same TB in several slots, but transmitting slots belonging to different slot groups using different Tx beams (i.e., QCL RS or TCI state). On the other hand, Scheme 3 (i.e., intra-slot TDM) is a scheme for repeatedly transmitting the same TB in several OFDM symbol groups, but transmitting some OFDM symbol groups and the remaining OFDM symbol groups using different Tx beams (i.e., QCL RS or TCI state).

Next, an M-DCI based M-TRP PDSCH transmission scheme will be described.

M-DCI based MTRP PDSCH transmission is a scheme in which each TRP schedules and transmits a PDSCH through DCI. That is, TRP 1 transmits PDSCH 1 through DCI 1, and TRP 2 transmits PDSCH 2 through DCI 2. When PDSCH 1 and PDSCH 2 overlap on the same frequency and time resource, since two PDSCHs are received for the same RE, resource efficiency is increased and transmission capacity is increased. For this, the concept of a CORESET pool, which means a group of several CORESETs, has been introduced. For example, TRP 1 transmits a PDCCH through CORESET belonging to CORESET pool 0, and also transmits a PDSCH scheduled by the corresponding PDCCH. TRP 2 transmits a PDCCH through CORESET belonging to CORESET pool 1, and also transmits a PDSCH scheduled by the corresponding PDCCH.

Even in the case of PUSCH, a specific TRP may schedule PUSCH transmission to the UE through CORESET belonging to each COERSET pool. For example, some PUCCH resources may be scheduled by TRP 1, and the remaining PUCCH resources may be scheduled by TRP 2. The UE may transmit an independent PUSCH/PUCCH for each of TRPs 1 and 2.

In addition, the UE may recognize a PUSCH (or PUCCH) scheduled by DCI received based on different CORESETs (or CORESETs belonging to different CORESET groups) as a PUSCH (or PUCCH) transmitted to different TRPs or as a PUSCH (or PUCCH) of a different TRP. In addition, the scheme for UL transmission (e.g., PUSCH/PUCCH) transmitted to different TRPs may be equally applied to UL transmission transmitted to different panels belonging to the same TRP.

In addition, the CORESET group ID (or COERSET pool index with the same meaning) described/mentioned in the present disclosure may mean index/identification information (e.g., ID) for distinguishing CORESET for each TRP/panel. In addition, the CORESET group may mean a group/union of CORESETs distinguished by index/identification information (e.g., ID)/CORESET group ID for distinguishing CORESETs for each TRP/panel. As an example, the CORESET group ID may be specific index information defined in CORESET configuration. That is, the CORESET group may be configured/indicated/defined by the index defined in the CORESET configuring for each CORESET. And/or, the CORESET group ID may mean an index/identification information/indicator for classification/identification between CORESETs configured/related to each TRP/panel.

CORESET group ID described/mentioned in this disclosure may be expressed by being replaced with a specific index/specific identification information/specific indicator for classification/identification between CORESETs set/associated with each TRP/panel. Corresponding information may be configured/indicated through higher layer signaling (e.g., RRC signaling, MAC-CE, etc.) and/or physical layer signaling (e.g., DCI). As an example, it may be configured/indicated to perform PDCCH detection for each TRP/panel in a corresponding CORESET group unit, and UCI (e.g., CSI, HARQ-ACK/NACK, SR, etc.) for each TRP/panel in a corresponding CORESET group unit. And/or uplink physical channel resources (e.g., PUCCH/PRACH/SRS resources) may be configured/indicated to be managed/controlled separately. And/or, HARQ ACK/NACK (process/retransmission) for PDSCH/PUSCH, etc. scheduled for each TRP/panel in units of the corresponding CORESET group may be managed.

For example, the higher layer parameter ControlResourceSet IE (information element) is used to configured a time/frequency control resource set (control resource set, CORESET). The corresponding CORESET may be related to detection/reception of downlink control information. The ControlResourceSet IE may include a CORESET-related ID (e.g., controlResourceSetID)/CORESET pool index for CORESET (e.g., CORESETPoolIndex)/time/frequency resource setting of CORESET/TCI information related to CORESET. As an example, the index of the CORESET pool (e.g., CORESETPoolIndex) may be configured to 0 or 1. In the above description in the present disclosure, a CORESET group may correspond to a CORESET pool, and a CORESET group ID may correspond to a CORESET pool index (e.g., CORESETPoolIndex). The aforementioned ControlResourceSet (ie, CORESET) may be configured through higher layer signaling (e.g., RRC signaling).

Additionally, in relation to M-TRP transmission and reception in Rel-17 NR standardization, M-TRP PDCCH/PDSCH SFN transmission, S-DCI based M-TRP PUSCH repetition transmission, and single PUCCH resource based M-TRP PUCCH repetition transmission are supported. In the transmission schemes, the same contents (i.e., DCI/UL TB/UCI, etc.) are repeatedly transmitted by improving the URLLC target for increasing reliability. Here, M-TRP PDCCH repetition transmission is performed based on TDM or FDM, M-TRP PDCCH/PDSCH SFN transmission is performed in the same time/frequency/layer, and S-DCI based M-TRP PUSCH repetition transmission is performed based on TDM, and a single PUCCH resource based M-TRP PUCCH repetition transmission is performed based on TDM.

First, the S-DCI based M-TRP PDCCH repetition transmission scheme will be described.

In NR Rel-17 standardization, a plurality of CORESETs in which different TCI states (i.e., different QCL RSs) are configured for M-TRP PDCCH repetition transmission are configured to the terminal, and a plurality of SS sets respectively connected to the corresponding CORESETs are configured. The base station may indicate/configured that the SS set connected to one CORESET and the SS set connected to another CORESET are linked for repetition transmission to the terminal. Through this, the terminal may recognize that PDCCH candidates of the corresponding SS set are repeatedly transmitted.

For example, two CORESETs, CORESET 0 and CORESET 1, may be configured to the terminal, CORESET 0 and CORESET 1 may be connected to SS set 0 and SS set 1, respectively, and SS set 0 and SS set 1 may be linked. The terminal may recognize that the same DCI is repeatedly transmitted in the PDCCH candidate of SS set 0 and the PDCCH candidate of SS set 1, and based on a specific rule, the terminal may recognize that the specific PDCCH candidate of SS set 0 and the specific PDCCH candidate of SS set 1 correspond to a pair configured for repeatedly transmitting the same DCI. The two PDCCH candidates may be referred to as linked PDCCH candidates, and when the terminal properly receives any one of the two PDCCH candidates, the corresponding DCI may be successfully decoded. However, when receiving the PDCCH candidate of SS set 0, the terminal may use the QCL RS (i.e., DL beam) of the TCI state of COERSET 0 connected to SS set 0, and when receiving the PDCCH candidate of SS set 1, the terminal may use the QCL RS (ie, DL beam) of the TCI state of COERSET 1 connected to SS set 1. Accordingly, the terminal receives the associated PDCCH candidates using different beams.

Next, the M-DCI based M-TRP PDCCH repetition transmission scheme will be described.

As one of the M-TRP PDCCH repetition transmission types, a plurality of TRPs may repeatedly transmit the same DCI through the same time/frequency/DMRS port, and such a transmission method may be referred to as SFN PDCCH transmission. However, for SFN PDCCH transmission, the base station configures a plurality of TCI states in one CORESET instead of configuring a plurality of CORESETs in which different TCI states are configured. When the terminal receives the PDCCH candidate through the SS set connected to the one CORESET, the terminal may perform channel estimation of the PDCCH DMRS and attempt decoding by using all of the plurality of TCI states.

In addition, during the above-described M-TRP PDSCH repetition transmission, the two TRPs repeatedly transmit the corresponding channel to different resources. However, when the resources used by the two TRPs are the same, that is, when the same channel is repeatedly transmitted through the same frequen-cy/time/layer (i.e., DMRS port), the reliability of the corresponding channel may be improved. In this case, since the same channel repeatedly transmitted is received while being transmitted (i.e., air) because the resources are not distinguished, it may be recognized as one channel (e.g., a composite channel) from a reception side (e.g., terminal). For SFN PDSCH transmission, two DL TCI states for PDSCH DMRS reception may be configured in the terminal.

Next, the S-DCI based M-TRP PUSCH repetition transmission scheme will be described.

In NR Rel-17 standardization, the base station configured two SRS sets to the terminal for S-DCI based M-TRP PUSCH transmission, and each set is used for indicating UL beam/QCL information for a UL Tx port for TRP 1 and TRP 2. In addition, the base station may indicate the SRS resource for each SRS resource set through two SRI fields included in one DCI, and may indicate up to two PC parameter sets. For example, the first SRI field may indicate the SRS resource and PC parameter set defined in SRS resource set 0, and the second SRI field may indicate the SRS resource and PC parameter set defined in SRS resource set 1. The terminal may be indicated with UL Tx port, PC parameter set, and UL beam/QCL information for TRP 1 through the first SRI field, and through this, the terminal performs PUSCH transmission in the TO corresponding to SRS resource set 0. Similarly, the terminal may be indicated with UL Tx port, PC parameter set, and UL beam/QCL information for TRP 2 through the second SRI field, and through this, the terminal performs PUSCH transmission in the TO corresponding to SRS resource set 1.

Next, the Single PUCCH resource based M-TRP PUCCH repetition transmission scheme will be described.

In NR Rel-17 standardization, the base station may activate/configure two spatial relation info on a single PUCCH resource to the terminal for the Single PUCCH resource based M-TRP PUCCH transmission (if FR1, enable/configure two PC parameter sets). When UL UCI is transmitted through the corresponding PUCCH resource, each spatial relation info is used to indicate to the terminal the spatial relation info for TRP 1 and TRP 2, respectively. For example, through the value indicated in the first spatial relation info, the terminal is indicated with Tx beam/PC parameter(s) toward TRP 1, and the terminal perform PUCCH transmission in TO corresponding to TRP 1 using corresponding information. Similarly, through the value indicated in the second spatial relation info, the terminal is indicated with Tx beam/PC parameter(s) toward TRP 2, and the terminal performs PUCCH transmission in the TO corresponding to TRP 2 using the corresponding information.

In addition, for M-TRP PUCCH repetition transmission, the configuring scheme is improved so that two spatial relation info may be configured in the PUCCH resource. That is, when power control (PC) parameters such as PLRS, Alpha, P0, and Closed loop index are set in each spatial relation info, spatial relation RS may be configured. As a result, PC information and spatial relation RS information corresponding to two TRPs may be configured through two spatial relation info. Through this, the terminal transmits UCI (i.e., CSI, ACK/NACK, SR, etc.) PUCCH in the first TO using the first spatial relation info, and transmits the same UCI PUCCH in the second TO using the second spatial relation info. In the present disclosure, a PUCCH resource in which two spatial relation info is configured is referred to as an M-TRP PUCCH resource, and a PUCCH resource in which one spatial relation info is configured is referred to as an S-TRP PUCCH resource.

Also, in the NR wireless communication system, S-DCI based multi-TB PUSCH/PDSCH scheduling may be considered. For example, in an ultra-high frequency band (e.g., beyond 5.26GHz, FR2 band) of an NR wireless communication system (e.g., a Rel-17 based NR system), a scheme in which one DCI simultaneously schedules multiple PUSCHs/PDSCHs may be supported.

As a specific example, a plurality of time resources (e.g., TDRA, Transmission Occasion (TO)) may be indicated at once through a time resource allocation field (e.g., TDRA field) of a DCI scheduling a PUSCH. In this case, different TBs for each TO may be transmitted through the PUSCH. The value of the frequency resource allocation field (e.g., FDRA field), the Modulation and Coding Scheme (MCS) field, the transmitted precoding matrix indicator (TPMI) field, and/or the SRS resource indicator (SRI) field of the DCI may be commonly applied to a plurality of scheduled TBs. In addition, new data indicator (NDI) and redundancy version (RV) for each TB may be individually indicated through the corresponding DCI, and one value for HARQ number may be indicated, but may sequentially increase in TO order based on an initial TO.

In addition, in relation to the NR wireless communication system, a method in which a terminal simultaneously transmits several channels/RSs of the same type or a method of simultaneously transmitting several channels/RSs of different types may be considered.

In the case of an existing terminal, an operation of transmitting multiple channels/RSs at one time is restricted. For example, the terminal may simultaneously transmit a plurality of SRS resources of different SRS resource sets for UL beam management, but may not simultaneously transmit a plurality of PUSCHs. Unlike this, in the future, an enhanced terminal may be considered to relax the above restrictions and simultaneously transmit a plurality of channels/RSs using a plurality of transmission panels. Such a terminal may be referred to as a simultaneous transmission across multi-panel (STxMP) terminal.

For example, a method for scheduling two PUSCHs (i.e., a first PUSCH and a second PUSCH) corresponding to two UL TBs to the same resource element (RE), and configuring a first spatial info RS and a first power control (PC) parameter set for the first PUSCH, and configuring a second spatial info RS and a second PC parameter set for the second PUSCH may be applied. That is, a first UL TCI state may be configured for the first PUSCH, and a second UL TCI state may be configured for the second PUSCH. In this case, the treminal may transmit the first PUSCH using the first Tx spatial filter (e.g. a first panel) corresponding to the first UL TCI state, and may transmit the second PUSCH using the second Tx spatial filter (e.g. a second panel) corresponding to the second UL TCI state.

In this regard, when the base station schedules the PUSCH through DCI, the base station may indicate the terminal with information on which one of the STxMP scheme, the single panel-based scheme, or the M-TRP-based PUSCH repetition transmission scheme is applied as the corresponding PUSCH transmission scheme. Here, the STxMP scheme is available when the terminal supports the STxMP capability, and the STxMP mode needs to be enabled in advance through RRC signaling or the like for the terminal. For this, the existing SRS resource set indication field may be redefined or a new DCI field may be introduced.

In addition, in the NR wireless communication system, the UL TCI state as well as the DL TCI state may be indicated through DL DCI (e.g., DCI format 1_1/1_2, etc.), and the UL TCI state may only be indicated without an indication of the DL TCI state. Through this, the scheme(s) used for configuring UL spatial information (e.g., UL beam) and power control (PC) in an existing NR wireless communication system (e.g., NR system in Rel-15/16) may be applied replacing/extending as a method for indicating the UL TCI state.

As a specific example, one UL TCI state may be indicated through the TCI field of DL DCI, and the corresponding UL TCI state may be applied to all PUSCHs/PUCCHs after a certain time (e.g., beam application time). In addition, the corresponding UL TCI state may be applied to some or all of the SRS resource sets.

In this regard, a method of indicating a plurality of UL TCI states (and/or DI TCI states) through a TCI field of DL DCI may also be considered.

In the overall description and/or proposed method of the present disclosure, the meaning of using/mapping a specific TCI state (or TCI) when transmitting/receiving data/DCI/UCI for a certain frequency/time/spatial resource may mean, in the case of DL, estimating a channel from the DMRS using the QCL type and QCL RS indicated by the corresponding DL TCI state in the corresponding frequen-cy/time/spatial resource and receiving/demodulating the estimated data/DCI. In addition, in the case of UL, the corresponding meaning may mean transmittting/modulating DMRS and data/UCI using the Tx beam and/or Tx power indicated by the UL TCI state in the corresponding frequency/time/spatial resource.

Here, the UL TCI state may include information for the Tx beam and/or Tx power of the terminal, and spatial relation info, etc. may be configured to the terminal through other parameters instead of the TCI state. The UL TCI state may be directly indicated by the UL grant DCI, and may mean spatial relation info of the SRS resource indicated through the SRI field of the UL grant DCI. Alternatively, the UL TCI state is an Open Loop (OL) Tx power control parameter (e.g., j: index for open loop parameters Po & alpha (maximum 32 parameter value sets per cell), q_d: index of DL RS resource for PL measurement (maximum 4 measurements per cell), l: may mean closed loop power control process index (maximum 2 processes per cell)) connected to a value indicated through the SRI field of the UL grant DCI. In addition, the UL TCI state may be indicated through DL grant DCI as well as UL grant DCI.

In the present disclosure, for convenience of explanation, the proposed method(s) was applied assuming cooperative transmission/reception between 2 TRPs, but the proposed method(s) may be extended and applied even in a multi-TRP environment of 3 or more, and multiple It may be extended and applied even in the panel environment. Here, different TRPs may be recognized by the terminal as different TCI states, and when the terminal transmits and receives data/DCI/UCI using the first TCI state (i.e., TCI state 1), it may mean transmitting and receiving data/DCI/UCI to/from first TRP (i.e., TRP 1).

In the present disclosure, TO (Transmission Occasion) may mean each channel transmitted at different times when multiple channels are TDMed, and when multiple channels are FDM, it may mean each channel transmitted at different frequencies/RBs, and when multiple channels are SDM, it may mean each channel transmitted to a different layer/beam/DMRS port. One TCI state may be mapped to each TO. When the same channel is repeatedly transmitted, intact data/DCI/UCI is transmitted to one TO, and the receiving side may receive multiple TOs and then the reception success rate may be increased.

Method for transmitting/receiving based on configuration/indication of a plurality of spatial parameters

In the NR wireless communication system, a dynamic beam update operation using a joint DL/UL TCI state and a separate DL/UL TCI state may be possible. In this regard, a method in which the base station performs indication/update with one common beam for a plurality of specific channel/RS combinations of the terminal by utilizing DCI and/or MAC-CE may be considered, and it may be referred to as a common beam update (UE-common beam update) operation.

That is, in the present disclosure, applying/performing common beam applicability through TCI state(s) may mean commonly applying one or more TCI state(s) to a specific channel/RS combination. In this case, a specific channel/RS combination to which one or more TCI state(s) is commonly applied may be referred to as a target channel/RS(s), a target channel/RS set, and the like.

For example, in the case of DL, the target channel/RS of the common beam update may include a UE-dedicated CORESET, UE-dedicated reception on PDSCH, CSI-RS (e.g., aperiodic CSI-RS for tracking/beam management (BM) usage, etc.), and the like. In the case of UL, the target channel/RS of the common beam update may include PUSCH (e.g., dynamic grant (DG) based PUSCH, configured grant (configured grant, CG) based PUSCH, etc.), dedicated PUCCH (e.g., all or some UE-dedicated PUCCH), SRS, and the like.

In addition, a existing beam indication operation (e.g., a beam indication operation in a Rel-17 NR system) has been improved mainly in relation to single-TRP (S-TRP). That is, schemes for a case where the number of DL/UL TCI states for the common beam is 1 (e.g., M=1 or N=1) has been considered.

In the present disclosure, a value M means the number of indicated DL TCI states, and a value N means the number of indicated UL TCI states.

In this regard, in the NR wireless communication system, a method of extending and applying the scheme to a multi-TRP (M-TRP) operation may be considered.

As an example, a method of indicating multiple DL/UL TCI states in M-TRP operation using a unified TCI framework in Rel-17 NR standardization may be considered. In this case, operations according to a plurality of M values need to be defined and extended in the DL aspect, and operations according to a plurality of N values need to be defined and extended in the UL aspect.

As described above, when the M value and/or the N value are set to two or more, it is necessary to consider a beam indication and/or beam application method based on a plurality of TCI states rather than a conventional single TCI state indication. For example, in relation to target channels/RSs of common beam applicability based on a plurality of TCI states, a method of utilizing a plurality of TCI states according to a specific scheme as well as a subset may also need to be considered. Here, the specific scheme may include a repetition scheme and/or a SFN scheme in DL/UL multi-TRP.

In the present disclosure, for a plurality of beam indication TCI states according to M values and/or N values in a unified TCI framework, methods for utilizing beam indication and/or beam application in consideration of schemes related to M-TRP transmission.

Beam indication and/or beam applicability in the present disclosure may mean indication for a common beam and/or applicability of a common beam.

Embodiment 1

This embodiment relates to a method of configuring/indicating channel(s) and/or RS(s) to which TCI states are applied, when the TCI states for the purpose of indicating a plurality of beams are indicated to the terminal.

For example, when a plurality of TCI states are indicated according to the configuration of the M value and/or the N value, indication information (e.g., indicator) for a channel/RS to which each/all corresponding TCI states are to be applied may be configured. At this time, information on beam applicability through the corresponding TCI state (s) as well as the utilization of TCI state (s) based on the corresponding indication information may be indicated.

As two or more M values and/or N values are configured, a case in which a plurality of TCI states are configured/indicated through DCI and/or MAC-CE for beam indication may be considered. In this case, in the present embodiment, a method for indicating beam using all of a plurality of TCI states for each channel/RS(s) or performing beam indication and related common beam applicability using only specific/partial TCI state(s) will be proposed.

For example, even if the M value and/or the N value are configured to two, one specific TCI state for indicating a beam may be applied only to a specific DG/CG based PUSCH or a specific PUCCH resource group, or may also be used for S-TRP purposes other than M-TRP purpose. In this regard, ambiguity may be resolved through an indicator indicating linkage between each indicated TCI state(s) and a channel/RS for each S-TRP/M-TRP scheme.

In the above example, the indication information for applying each or both of the two TCI state(s) (i.e., the TCI state when the M value and/or the N value is configured to two) may be used for a specific purpose based on a pre-configured scheme through RRC signaling and/or MAC-CE. Alternatively, information on the linkage may be indicated by adding a new indicator to DCI used for scheduling based on S-TRP/M-TRP. Alternatively, information on the linkage may be indicated based on an existing field of the corresponding DCI. An operation based on a plurality of indicated TCI states may be interpreted based on at least one of these indication methods.

As a specific example, by using an SRS resource set related field (e.g., SRS resource set selection field, SRS resource set indicator field) included in single-DCI(S-DCI), the terminal may be indicated to use both two TCI states or use only the first TCI state or second TCI state. In addition, the indicated two TCI states may be mapped to a subset of target channel(s)/RS(s) configured according to M/N configuration, and an indication on whether to apply the common beam to each may be performed together. Alternatively, an indication for two TCI states to be commonly applied only to a specific scgene (e.g., a specific M-TRP scheme) and not to apply applicability to the remaining target channel(s)/RS(s) for corresponding beams (e.g., the indicated two TCI states) may also be performed.

In this regard, in the unified TCI framework for the M-TRP scheme, a plurality of TCI states may be configured/indicated through DCI and/or MAC-CE for beam indication according to the configuration of two or more M values and/or N values. The plurality of indicated TCI states may correspond to beams for operating M-TRP schemes.

At this time, when the corresponding TCI states are equally applied to all M-TRP schemes, problems may occur in terms of interference control between beams for supporting the terminal and scheduling flexibility for the supporting terminal. Therefore, in order to solve the above problem, when a plurality of TCI states are configured/indicated, a method of configuring/indicating whether to perform a beam indication operation and related common beam applicability for each M-TRP scheme will be proposed.

(Embodiment 1-1)

When TCI states for the purpose of indicating a plurality of beams are indicated to the terminal according to the configuration of the M value and/or the N value, a method for configuring an indicator for equally/differently applying the corresponding TCI states for each M-TRP scheme may be considered. In this regard, for the UL/DL M-TRP scheme, a swapping flag for a plurality of indicated TCI states may be configured.

That is, considering a specific scheme of indicating a beam using all of the plurality of TCI states configured/indicated as described above and performing related common beam applicability, this method may correspond to a method of configuring/indicating whether to apply the specific scheme equally or differently for each M-TRP scheme.

The indication information for distinguishing and applying the plurality of TCI states for each M-TRP scheme may be used for a specific purpose based on a pre-configured scheme through RRC signaling and/or MAC-CE. Alternatively, by adding a new indicator to the DCI used in S-TRP/M-TRP-based scheduling, information on linkage between the plurality of TCI states and a channel/RS to be applied (per M-TRP scheme) may be indicated. Alternatively, information on the linkage may be indicated based on an existing field of the corresponding DCI. An operation based on the plurality of TCI states may be interpreted based on at least one of these indication methods.

For example, in order to apply a different order to two indicated TCI states (i.e., a first TCI state and a second TCI state) for each M-TRP scheme, flag information (e.g., a swapping flag) may be configured. If the value of the corresponding flag information is '0', the TCI state to be applied to each TO of the M-TRP repetition transmission scheme may be applied in the order of the first TCI state and the second TCI state. On the other hand, if the value of the corresponding flag information is '1', the TCI state to be applied to each TO of the M-TRP repetition transmission scheme may be applied in the order of the second TCI state and the first TCI state. It it clear that the opposite case is also possible.

The flag information may be configured through RRC signaling and/or MAC-CE. In addition, in order to provide a configruation possibility for application of the indicated TCI state, the flag information may be configured for each M-TRP scheme and/or channel/RS. And/or, the flag information may be present in M-TRP-based UL/DL scheduling DCI.

For example, in the case of an S-DCI-based M-TRP operation, the flag information (e.g., a swapping field) may be added in the form of 1 bit to a DCI format performing a TCI indication. In the case of utilizing the indication of the SRS resource set related field (e.g. SRS set selection field) in the S-DCI for UL purpose, it is possible to apply both TCI states or to apply the first TCI state or the second TCI state. On the other hand, in the case of PUCCH, since there is no information/field according to the above-mentioned DCI, the above-described flag information or indicator indicating the order may be configured, so that the application order of TCI states may be configured independently for each channel/RS according to the general M-TRP scheme.

As another example, in case of M-TRP operation based on M-DCI, geneally, an update of a TCI state is performed through different DCIs through each CORESET pool (i.e., CORESET pool index). In this regard, swapping (i.e., the order of application) for each previously indicated TCI state through 1-bit information (eg, 1-bit flag) in the corresponding DCI or a pre-configured/provided configuration for the above-described flag information (e.g., swapping flag) may be indicated. This method has an advantage in terms of signaling overhead compared to a method of performing an update by re-indicating TCI states to be swapped through each DCI.

(Embodiment 1-2)

In addition, when TCI states for the purpose of indicating a plurality of beams are indicated to the terminal according to the setting of the M value and/or N value, a method of configuring one of the corresponding TCI states as a TCI state for DL/UL of the S-TRP may be considered. For example, the corresponding method may be for S-DCI-based M-TRP operation.

That is, this method may correspond to a method of defining/configuring/indicating to utilize one of the plurality of TCI states configured/indicated as described above as a TCI state for the S-TRP scheme as well as the M-TRP scheme. Here, the utilized one TCI state may be referred to as a primary TCI state.

For example, one TCI state among two TCI states (i.e., a first TCI state or a second TCI state) may be defined/configured/indicated using a codepoint of a TCI state field. This may mean that the one TCI state is irrelevant to M-TRP operation or used as a reference TCI state for common beam applicability of DL/UL channel/RS in S-TRP operation.

In addition, as described above, when a change for application order of TCI state occurs based on flag information (e.g., swapping flag), the existing defined/configured/indicated TCI state may be applied/corresponded depending on the result of that swapping or regardless of the result of that swapping. In addition, when the primary TCI state is configured/indicated only for the order among the two TCI states within the above codepoint, the primary TCI state may be changed and applied according to the flag information (e.g., swapping flag).

Embodiment 2

This embodiment is about a method for applying TCI states in relation to an S-DCI based M-TRP transmission method when the TCI states for the purpose of indicating a plurality of beams are indicated to the terminal.

For example, in relation to the S-DCI-based M-TRP transmission method, when a plurality of TCI states for beam indication are indicated according to the configuration of M value and/or N value, each TCI state may be corresponded to a beam for repetition transmission for each FDM/TDM or may be simultaneously applied for SFN-based PDCCH/PDSCH.

For S-DCI based M-TRP transmission, as two or more M values and/or N values are configured, a case in which a plurality of TCI state(s) is configured/indicated through DCI and/or MAC-CE for beam indication may be considered. In this case, in the present embodiment, a method for indicating beam using all of a plurality of TCI states for each channel/RS(s) or performing beam indication and related common beam applicability using only specific/partial TCI state(s) will be proposed.

As an example, for the application of two TCI states for the purpose of beam indication, when M-TRP-based PDCCH/PDSCH/PUSCH/PUCCH repetition transmission is scheduled, the two TCI states may be applied in correspondence with each transmission occasion (TO). And/or, for application of two TCI states for the purpose of beam indication, when SFN-based PDCCH/PDSCH is scheduled/configured, each TCI state may be applied in correspondent with (existing) each TCI state for indicating a beam for PDCCH/PDSCH.

The indication information for applying each or both of the two TCI states may be used for a specific purpose based on a pre-configured scheme through RRC signaling and/or MAC-CE. Alternatively, by adding a new indicator to the DCI used in S-TRP/M-TRP-based scheduling, information on linkage between the plurality of TCI states and a channel/RS to be applied (per S-TRP scheme/M-TRP scheme) may be indicated. Alternatively, information on the linkage may be indicated based on an existing field of the corresponding DCI. An operation based on the plurality of TCI states may be interpreted based on at least one of these indication methods.

As a specific example, by using an SRS resource set related field (e.g., SRS resource set selection field, SRS resource set indicator field) included in S-DCI, the terminal may be indicated to use all two TCI states, or the first TCI state or the second TCI states. In addition, it may be possible to apply the indicated two TCI states to a subset of target channel(s)/RS(s) configured according to the M/N configuration.

In this regard, in the unified TCI framework for the M-TRP scheme, a plurality of TCI states may be configured/indicated through DCI and/or MAC-CE for beam indication according to the configuration of two or more M values and/or N values. The plurality of indicated TCI states may correspond to beams for operating M-TRP schemes.

At this time, even for PUSCH transmission scheduled/activated through DCI for UL transmission (e.g., DCI format 0_1/0_2), it is necessary to indicated the beam to operate the corresponding scheme by configuring a mapping relationship according to TCI state(s) indicated through beam indication.

(Embodiment 2-1)

When a plurality of TCI states based on the unified TCI framework are indicated to the terminal for the purpose of beam indication according to the configruation of the N value, a method of configuring/updating a beam to operate the corresponding scheme through the CORESET subset/group for S-DCI-based PUSCH transmission may be considered.

For example, a specific CORESET to be used for S-TRP-based PUSCH may be included in one of CORESET subsets/groups, and a specific TCI state indicated in the corresponding CORESET subset/group may be used as beam information for PUSCH transmission.

As another example, a specific CORESET to be used for M-TRP-based PUSCH repetition transmission or (SDM/SFN) STxMP-based PUSCH transmission may be included in one of the CORESET subsets/groups, and indicated TCI state(s) indicated for the corresponding CORESET subset/group may be used as beam information for repetition transmission/STxMP, respectively. At this time, according to the value of the SRS resource set related field (e.g. SRS set selection field) in the DCI (e.g. DCI format 0_1/0_2) received through the corresponding CORESET, all of the indicated two TCI states or a specific one among the indicated two TCI states may be applied to configure/update the beam.

In addition, when a plurality of TCI state(s) is configured/indicated through DCI and/or MAC-CE for beam indication as two or more M values and/or N values are configured, a beam correspondence method for each channel/RS will be proposed.

(Embodiment 2-2)

When a plurality of TCI states are indicated to the terminal for the purpose of beam indication according to the configuration of the M value and/or the N value, a method of matching each TCI state with respect to the S-DCI-based M-TRP transmission method may be considered

Hereinafter, a TCI state corresponding method when the M value is 2, that is, when two TCI states for DL transmission and reception are configured/indicated will be described.

First, a TCI state corresponding method related to PDCCH transmission and reception may be as in the following examples.

For example, for a CORESET configured with two TCI states, the two indicated TCI states may be applied in a 1-to-1 correspondence with each TCI state configured for the CORESET.

As another example, when a CORESET is configured to one TCI state and linked to another CORESET through a search space set linkage, each indicated TCI state may be applied through an ascending/descending order method based on CORESET identification information (e.g., ID) for linked CORESETs. As a specific example, when the first CORESET and the second CORESET are linked by search space set linkage, the first indicated TCI state may be applied to the first CORESET, and the second indicated TCI state may be applied to the second CORESET.

As another example, when CORESET is configured to one TCI state and is not linked to another CORESET through search space set linkage, the first indicated TCI state among the two TCI states may be applied to the corresponding CORESET. Alternatively, in this case, which of the two TCI states is to be applied may be configured for each CORESET in advance, and accordingly, one indicated TCI state may be applied to the corresponding CORESET.

In relation to the above examples, CORESET configured with two TCI states or one TCI state may be based on an existing method rather than an unified TCI state method. That is, the number of TCI states configured for the corresponding CORESET may mean the number of TCI states configured/activated for the CORESET based on RRC signaling and/or MAC-CE. Alternatively, the number of TCI states configured for the corresponding CORESET may mean the number of TCI states of the CORESET QCLed using the SSB selected through the latest RACH procedure.

Next, a TCI state corresponding method related to PDSCH transmission and reception may be as follows.

For example, in the case of a PDSCH scheduled by DCI format 1_0, a first indicated TCI state among two indicated TCI states may be applied or a pre-defined TCI state may be applied. Considering that DCI format 1_0 is a DCI that performs only basic functions for data scheduling, multiple TCI states may not need to be applied.

As another example, in the case of a PDSCH scheduled by DCI formats 1_1/1_2, if a condition for a (existing) M-TRP-based PDSCH is satisfied, both indicated TCI states may be applied. Here, the condition may include the number of indicated TCI states, the number of CDM groups, an RRC enabler for repetition transmission of FDM/TDM-based M-TRP, and the number of repetition. If the above condition is not satisfied, the first indicated TCI state among the two indicated TCI states may be applied or a pre-defined TCI state may be applied for S-TRP-based PDSCH transmission.

Hereinafter, a TCI state corresponding method when the N value is 2, that is, when two TCI states for UL transmission and reception are configured/indicated will be described.

First, in relation to PUCCH transmission and reception, whether to use one specific TCI state or all TCI states among two indicated TCI states may be configured for each PUCCH group/set, and accordingly, the TCI state(s) may be applied.

Next, a TCI state corresponding method related to PUSCH transmission and reception may be as follows.

For example, in the case of a PUSCH scheduled by DCI format 0_0, a first indicated TCI state among two indicated TCI states may be applied or a pre-defined TCI state may be applied. Considering that DCI format 0_0 is a DCI that performs only basic functions for data scheduling, multiple TCI states may not need to be applied.

As another example, in the case of a PDSCH scheduled according to DCI format 1_1/1_2, if a field condition in DCI is satisfied, a TCI state indicated based on an SRS resource set indicator may be applied. Here, the condition may include whether an SRS resource set indicator, two SRI fields, and/or two PMI fields exist/are configured as fields in DCI. If the above condition is not satisfied, the first indicated TCI state among the two indicated TCI states may be applied or a pre-defined TCI state may be applied for PUSCH transmission.

As another example, in the case of configured grant (CG)-based PUSCH (i.e., PUSCH based on higher layer configuration, etc.), if field(s) for M-TRP is configured, both indicated TCI states may be applied. Here, the field(s) may include fields such as 'p0-PUSCH-Alpha' and 'powerControlLoopToUse' in the ConfiguredGrantCon-fig IE. And/or (in the case of Type 1 CG PUSCH) the field(s) may include fields such as 'pathlossReferenceIndex', 'srs-ResourceIndicator' and 'precodingAndNumber-OfLayers' in the rrc-ConfiguredUplinkGrant IE. And/or (in case of Type 1 CG PUSCH) the field(s) may include two SRI fields and two TPMI fields. The Type 1 CG PUSCH may correspond to a CG PUSCH based on RC, and the Type 2 CG PUSCH may correspond to a CG PUSCH based on RRC and DCI.

In addition, for the above-described methods in the case where the value of M is 2 and the value of N is 2, the description to which the first indicated TCI state is applied may be changed/replaced with the description to which the second indicated TCI state is applied through flag information (e.g., the swapping flag described above in the present disclosure).

Embodiment 3

This embodiment relates to a method of applying corresponding TCI states in relation to an M-DCI-based M-TRP transmission method when TCI states for the purpose of indicating a plurality of beams are indicated to the terminal.

For example, in relation to the M-TRP transmission method based on M-DCI, when a plurality of TCI states for beam indication are indicated according to M value and/or N value configuration, each TCI state may be applied in association with a CORESET pool index. At this time, each TCI state may be indicated/updated through DCI and/or MAC-CE associated with the CORESET pool (i.e., CORESET pool index). In addition, each DL/UL target channel/RS subset(s) for common beam applicability may be associated with a CORESET pool index, and may operate based on a corresponding TCI state.

In relation to M-DCI based M-TRP transmission, this method may mean an operation method when a plurality of TCI states are indicated through DCI and/or MAC-CE for beam indication, as two or more M values and/or N values are configured in a status in which a plurality of CORESET pools are configured. As a specific example, the terminal may receive indication for the first TCI state/the second TCI state through DCI in the first CORESET/the second CORESET, and may transmit a scheduled specific channel (e.g. PDCCH, PUSCH, PUCCH, etc.) by applying a beam corresponding to each TCI state.

Even for the target channel/RS(s) of common beam applicability through each indicated TCI state, when it is associated based on the RRC configuration for each CORESET pool index, an operation may be performed based on the indicated TCI state.

In addition, in relation to the above-described association between the TCI state and the CORESET pool index, in the case of CG PUSCH, the CORESET pool may be determined depending on which CORESET pool the DCI indicating retransmission belongs to. This method may be a method for solving the problem that the association with the CORESET pool for some PUSCHs may be unclear in terms of utilizing/applying the TCI state for beam indication based on the association with the CORESET pool.

For example, in the case of a Type 1 CG PUSCH in which scheduling for channel is performed through RRC signaling, a pool index for the corresponding PUSCH (i.e., CORESET pool index) may be determined depending on which CORESET pool the DCI indicating retransmission of the corresponding PUSCH belongs to. The TCI state associated with the CORESET pool index determined in this way may be applied for the corresponding PUSCH.

In addition, until the DCI indicating the retransmission exists, the terminal may assume that the corresponding PUSCH is linked to a specific CORESET pool based on a pre-defined method. In addition to the Type 1 CG PUSCH of the above example, for other types of PUSCH/PUCCH/SRS or the like, the indication for the CORESET pool may be ambiguous until the scheduling DCI for the corresponding channel/RS exists. Therefore, even in this case, the terminal may assume that a specific pool index (i.e., CORESET pool index) is linked to the PUSCH.

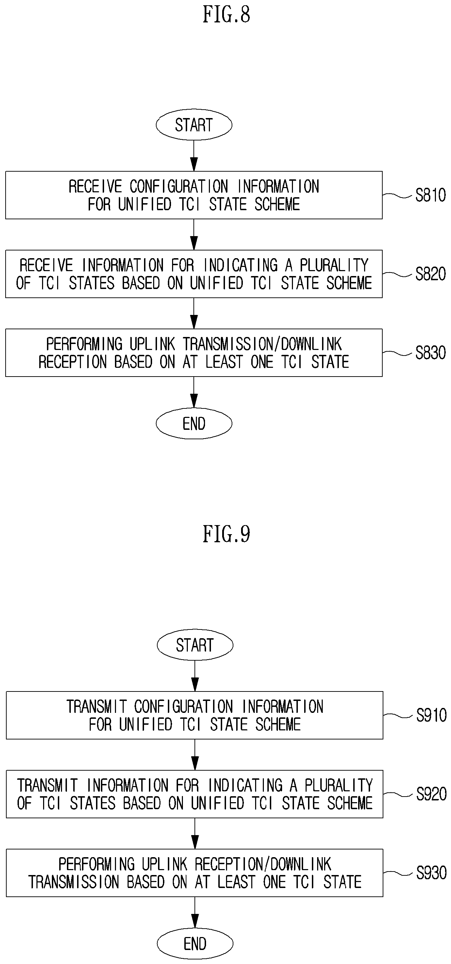

FIG. 8 is a diagram illustrating an operation of a terminal in a spatial parameter-based transmission/reception method according to an embodiment of the present disclosure.

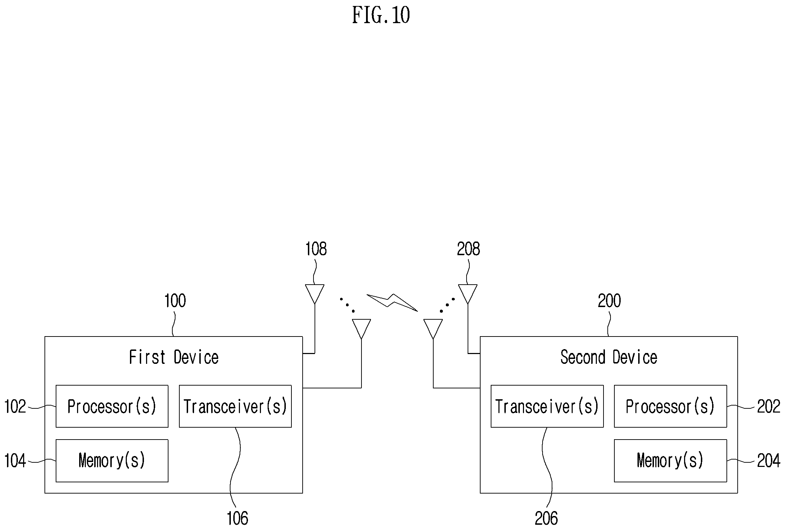

FIG. 8 illustrates an operation of a terminal based on the previously proposed method (e.g., any one or a combination of Embodiments 1 to 3 and detailed embodiments thereof). The example of FIG. 8 is for convenience of description, and does not limit the scope of the present disclosure. Some step(s) illustrated in FIG. 8 may be omitted depending on circumstances and/or configuration. In addition, the terminal in FIG. 8 is only one example, and may be implemented as the apparatus illustrated in FIG. 10 below. For example, the processor 102/202 of FIG. 10 may control to transmit and receive channel/signal/data/information (e.g., RRC signaling, MAC CE, DCI for UL/DL scheduling, SRS, PDCCH, PDSCH, PUSCH, PUCCH, etc.) using the transceiver 106/206, and may control to store channel/signal/data/information to be transmitted or received in the memory 104/204.

Also, the operation of FIG. 8 may be processed by one or more processors (102, 202) in FIG. 10, and the operation of FIG. 8 may be stored in a memory (e.g., one or more memories (104, 204) in FIG. 10, in the form of instructions/programs (e.g., instructions, executable code) for driving at least one processor (102, 202) in FIG. 10.

Referring to FIG. 8, in step S810, the terminal may receive configuration information on the unified TCI scheme.

For example, as in the embodiments described above in the present disclosure (e.g., embodiment 1, embodiment 2, embodiment 3 and detailed embodiments thereof), the terminal may receive configuration information for beam indication and/or common beam applicability or the like based on the unified TCI framework. Through this, information on a channel/RS that is target to common beam applicability may be transferred.

In step S820, the terminal may receive information indicating a plurality of TCI states based on the unified TCI scheme. For example, the corresponding information may be transferred through DCI and/or MAC-CE.

For example, as in the embodiments described above in the present disclosure (eg, Embodiment 1, Embodiment 2, Embodiment 3 and detailed embodiments thereof), the terminal may receive indication information for a plurality of TCI states for the purpose of beam indication according to two or more M values and/or N values.

In step S830, the terminal may perform uplink transmission or downlink reception based on at least one TCI state among the plurality of TCI states. For example, the terminal may perform uplink/downlink transmission/reception through a beam (e.g., a Tx/Rx spatial filter) determined by applying all or some of the plurality of indicated TCI states. Here, the at least one TCI state may mean a TCI state directly applied to the uplink transmission or the downlink reception.

In this regard, the at least one TCI state may be determined based on at least one of a pre-defined rule or indication information related to application of the plurality of TCI states.

For example, as in the embodiments described above in the present disclosure (e.g., Embodiment 1, Embodiment 2, Embodiment 3 and detailed embodiments thereof), the pre-defined rule may be applied according to a scheme for the uplink transmission or the downlink reception.

As a specific example, when the uplink transmission or the downlink reception is configured in a repetition-based scheme, the plurality of TCI states may be respectively mapped and applied to a plurality of transmission occasions according to the repetition-based scheme. In this regard, based on a plurality of CORESETs configured through search space set linkage for the repetition-based scheme, the plurality of TCI states may be mapped and applied according to ascending order or descending order of identifiers for the plurality of CORESETs.

As another specific example, when the uplink transmission or the downlink reception is configured in a single frequency network (SFN)-based scheme, the plurality of TCI states are respectively mapped to a plurality of TCI states pre-configured for the SFN-based scheme.

In addition, for example, as in the embodiments described above in the present disclosure (e.g., Example 1, Example 2, Example 3 and detailed examples thereof), the indication information related to the application of the plurality of TCI states includes information on whether to apply all of the plurality of TCI states or a part/some of the plurality of TCI states. In this regard, the whether to apply all of the plurality of TCI states or a part/some of the plurality of TCI states is indicated for each of at least one channel or at least one reference signal configured as a target of the unified TCI scheme.

In addition, for example, as in the above-described embodiments (eg, embodiment 1, embodiment 2, embodiment 3 and detailed embodiments thereof) in the present disclosure, application of the plurality of TCI states and Related indication information may be indicated based on an SRS resource set related field (eg, SRS resource set selection related field, etc.) included in DCI. Alternatively, indication information related to application of the plurality of TCI states may be indicated based on a field newly defined in DCI.

In addition, for example, as in the embodiments described above in the present disclosure (e.g., embodiment 1, embodiment 2, embodiment 3 and detailed embodiments thereof), when physical uplink shared channel (PUSCH) transmission is performed based on the at least one TCI state, the plurality of TCI states may be indicated for at least one CORESET group to which a specific CORESET configured for the PUSCH belongs.

In addition, for example, as in the embodiments described above in the present disclosure (e.g., embodiment 1, embodiment 2, embodiment 3 and detailed embodiments thereof), when PUSCH transmission being performed based on the at least one TCI state, the at least one TCI state may be determined based on whether a plurality of SRS resource indication information or a plurality of precoding related information is configured.

The operation of the terminal and/or information on the configuration/indication in FIG. 8 may be embodied based on descriptions in the above-described embodiments (e.g., Embodiment 1, Embodiment 2, Embodiment 3 and detailed embodiments thereof) in the present disclosure.

FIG. 9 is a diagram illustrating an operation of a base station in a spatial parameter-based transmission/reception method according to an embodiment of the present disclosure.

FIG. 9 illustrates an operation of a base station based on the previously proposed method (e.g., any one or a combination of Embodiments 1 to 3 and detailed embodiments thereof). The example of FIG. 9 is for convenience of description, and does not limit the scope of the present disclosure. Some step(s) illustrated in FIG. 9 may be omitted depending on circumstances and/or configuration. In addition, the base station in FIG. 9 is only one example, and may be implemented as the apparatus illustrated in FIG. 10 below. For example, the processor 102/202 of FIG. 10 may control to transmit and receive channel/signal/data/information (e.g., RRC signaling, MAC CE, DCI for UL/DL scheduling, SRS, PDCCH, PDSCH, PUSCH, PUCCH, etc.) using the transceiver 106/206, and may control to store channel/signal/data/information to be transmitted or received in the memory 104/204.

Also, the operation of FIG. 9 may be processed by one or more processors (102, 202) in FIG. 10, and the operation of FIG. 9 may be stored in a memory (e.g., one or more memories (104, 204) in FIG. 10, in the form of instructions/programs (e.g., instructions, executable code) for driving at least one processor (102, 202) in FIG. 10.

Referring to FIG. 9 in step S90, the base station may transmit configuration information on the unified TCI scheme.

For example, as in the embodiments described above in the present disclosure (e.g., embodiment 1, embodiment 2, embodiment 3 and detailed embodiments thereof), the base station may transmit configuration information for beam indication and/or common beam applicability or the like based on the unified TCI framework. Through this, information on a channel/RS that is target to common beam applicability may be transferred.

In step S920, the base station may transmit information indicating a plurality of TCI states based on the unified TCI scheme. For example, the corresponding information may be transferred through DCI and/or MAC-CE.

For example, as in the embodiments described above in the present disclosure (eg, Embodiment 1, Embodiment 2, Embodiment 3 and detailed embodiments thereof), the base station may transmit indication information for a plurality of TCI states for the purpose of beam indication according to two or more M values and/or N values.

In step S930, the base station may perform uplink reception or downlink transmission based on at least one TCI state among the plurality of TCI states. For example, the base station may perform uplink/downlink transmission/reception through a beam (e.g., a Tx/Rx spatial filter) determined by applying all or some of the plurality of indicated TCI states. Here, the at least one TCI state may mean a TCI state directly applied to the uplink transmission or the downlink reception.

In this regard, the at least one TCI state may be determined based on at least one of a pre-defined rule or indication information related to application of the plurality of TCI states.

For example, as in the embodiments described above in the present disclosure (e.g., Embodiment 1, Embodiment 2, Embodiment 3 and detailed embodiments thereof), the pre-defined rule may be applied according to a scheme for the uplink transmission or the downlink reception.

As a specific example, when the uplink transmission or the downlink reception is configured in a repetition-based scheme, the plurality of TCI states may be respectively mapped and applied to a plurality of transmission occasions according to the repetition-based scheme. In this regard, based on a plurality of CORESETs configured through search space set linkage for the repetition-based scheme, the plurality of TCI states may be mapped and applied according to ascending order or descending order of identifiers for the plurality of CORESETs.

As another specific example, when the uplink transmission or the downlink reception is configured in a single frequency network (SFN)-based scheme, the plurality of TCI states are respectively mapped to a plurality of TCI states pre-configured for the SFN-based scheme.

In addition, for example, as in the embodiments described above in the present disclosure (e.g., Example 1, Example 2, Example 3 and detailed examples thereof), the indication information related to the application of the plurality of TCI states includes information on whether to apply all of the plurality of TCI states or a part/some of the plurality of TCI states. In this regard, the whether to apply all of the plurality of TCI states or a part/some of the plurality of TCI states is indicated for each of at least one channel or at least one reference signal configured as a target of the unified TCI scheme.

In addition, for example, as in the above-described embodiments (eg, embodiment 1, embodiment 2, embodiment 3 and detailed embodiments thereof) in the present disclosure, application of the plurality of TCI states and Related indication information may be indicated based on an SRS resource set related field (eg, SRS resource set selection related field, etc.) included in DCI. Alternatively, indication information related to application of the plurality of TCI states may be indicated based on a field newly defined in DCI.

In addition, for example, as in the embodiments described above in the present disclosure (e.g., embodiment 1, embodiment 2, embodiment 3 and detailed embodiments thereof), when physical uplink shared channel (PUSCH) transmission is performed based on the at least one TCI state, the plurality of TCI states may be indicated for at least one CORESET group to which a specific CORESET configured for the PUSCH belongs.

In addition, for example, as in the embodiments described above in the present disclosure (e.g., embodiment 1, embodiment 2, embodiment 3 and detailed embodiments thereof), when PUSCH transmission being performed based on the at least one TCI state, the at least one TCI state may be determined based on whether a plurality of SRS resource indication information or a plurality of precoding related information is configured.

The operation of the terminal and/or information on the configuration/indication in FIG. 8 may be embodied based on descriptions in the above-described embodiments (e.g., Embodiment 1, Embodiment 2, Embodiment 3 and detailed embodiments thereof) in the present disclosure.

General Device to which the Present Disclosure may be applied

FIG. 13 illustrates a block diagram of a wireless communication device according to an embodiment of the present disclosure.

In reference to FIG. 13, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a user equipment (UE) in a wireless communication system, the method comprising:

    receiving configuration information for a unified transmission configuration indicator (TCI) scheme;
    receiving information indicating a plurality of TCI states based on the unified TCI scheme; and
    performing uplink transmission or downlink reception based on at least one TCI state among the plurality of TCI states,
    wherein the at least one TCI state is determined based on at least one of a pre-defined rule or indication information related to application of the plurality of TCI states.

2. The method of claim 1,
wherein the pre-defined rule is applied according to a transmission and reception scheme for the uplink transmission or the downlink reception.

3. The method of claim 2,
wherein, based on the uplink transmission or the downlink reception being configured in a repetition-based scheme, the plurality of TCI states are respectively mapped to a plurality of transmission occasions according to the repetition-based scheme.

4. The method of claim 3,
wherein, based on a plurality of control resource sets (CORESETs) configured through search space set linkage for the repetition-based scheme, the plurality of TCI states are mapped according to ascending order or descending order of identifiers for the plurality of CORESETs.

5. The method of claim 2,
wherein, based on the uplink transmission or the downlink reception being configured in a single frequency network (SFN)-based scheme, the plurality of TCI states are respectively mapped to a plurality of TCI states pre-configured for the SFN-based scheme.

6. The method of any one of the preceding claims,
wherein the indication information related to the application of the plurality of TCI states includes information on whether to apply all of the plurality of TCI states or a part of the plurality of TCI states.

7. The method of claim 6,
wherein the whether to apply all of the plurality of TCI states or a part of the plurality of TCI states is indicated for each of at least one channel or at least one reference signal configured as a target of the unified TCI scheme.

8. The method of any one of the preceding claims,
   wherein the indication information related to the application of the plurality of TCI states is indicated based on a sounding reference signal (SRS) resource set related field included in downlink control information (DCI).

9. The method of any one of the preceding claims,
   wherein, based on physical uplink shared channel (PUSCH) transmission being performed based on the at least one TCI state, the plurality of TCI states are indicated for at least one CORESET group to which a specific CORESET configured for the PUSCH belongs.

10. The method of any one of the preceding claims,
    wherein, based on PUSCH transmission being performed based on the at least one TCI state, the at least one TCI state is determined based on whether a plurality of SRS resource indication information or a plurality of precoding related information is configured.

11. A user equipment (UE) in a wireless communication system, the UE comprising:

    at least one transceiver; and
    at least one processor coupled with the at least one transceiver,
    wherein the at least one processor is configured to:

    receive configuration information for a unified transmission configuration indicator (TCI) scheme;
    receive information indicating a plurality of TCI states based on the unified TCI scheme; and
    perform uplink transmission or downlink reception based on at least one TCI state among the plurality of TCI states,
    wherein the at least one TCI state is determined based on at least one of a pre-defined rule or indication information related to application of the plurality of TCI states.

12. A base station in a wireless communication system, the base station comprising:

    at least one transceiver; and
    at least one processor coupled with the at least one transceiver,
    wherein the at least one processor is configured to:

    transmit configuration information for a unified transmission configuration indicator (TCI) scheme;
    transmit information indicating a plurality of TCI states based on the unified TCI scheme; and
    perform uplink reception or downlink transmission based on at least one TCI state among the plurality of TCI states,
    wherein the at least one TCI state is determined based on at least one of a pre-defined rule or indication information related to application of the plurality of TCI states.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^\mu$ OFDM Symbol

$k = N^\mu_{RB} N^{RB}_{SC} - 1$

Resource Block

Resource Element
- In a resource grid, $(k, \bar{l})$
- In a resource block, $(k, l)$

$N^\mu_{RB} N^{RB}_{SC} - 1$ Subcarrier

$N^{RB}_{SC}$ Subcarrier

$k = 0$

$l = 0$

$l = 14 \cdot 2^\mu - 1$

## FIG.4

# FIG.5

Resource grid

A carrier
(up to 3300 subcarriers,i,e.,275 RBs)

A BWP

1 RB=12 subcarrier

1 RE

1 subcarrier

1 Symbol

k=0

l=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

# FIG.7

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

## FIG.8

START

↓

RECEIVE CONFIGURATION INFORMATION
FOR UNIFIED TCI STATE SCHEME — S810

↓

RECEIVE INFORMATION FOR INDICATING A PLURALITY
OF TCI STATES BASED ON UNIFIED TCI STATE SCHEME — S820

↓

PERFORMING UPLINK TRANSMISSION/DOWNLINK
RECEPTION BASED ON AT LEAST ONE TCI STATE — S830

↓

END

## FIG.9

START

↓

TRANSMIT CONFIGURATION INFORMATION
FOR UNIFIED TCI STATE SCHEME — S910

↓

TRANSMIT INFORMATION FOR INDICATING A PLURALITY
OF TCI STATES BASED ON UNIFIED TCI STATE SCHEME — S920

↓

PERFORMING UPLINK RECEPTION/DOWNLINK
TRANSMISSION BASED ON AT LEAST ONE TCI STATE — S930

↓

END

EP 4 270 807 A1

FIG.10

Europäisches
Patentamt

European
Patent Office

Office européen
des brevets

**EUROPEAN SEARCH REPORT**

Application Number

EP 22 21 4543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/067521 A1 (LENOVO BEIJING LTD [CN]) 7 April 2022 (2022-04-07) | 1-3,6-12 | INV. H04B7/024 |
| Y | * paragraphs [0008], [0042], [0057] * <br> * paragraph [0079] – paragraph [0084] * <br> * paragraph [0109] – paragraph [0116] * <br> * paragraphs [0094], [0121] * | 4,5 | H04B7/0417 <br> H04B7/06 <br> H04B7/0404 |
| Y | US 2022/070909 A1 (TAKEDA KAZUKI [JP] ET AL) 3 March 2022 (2022-03-03) <br> * paragraph [0089] – paragraph [0100]; figure 4 * <br> * paragraph [0111] * | 4 | |
| Y | US 2021/352649 A1 (KIM HYUNGTAE [KR] ET AL) 11 November 2021 (2021-11-11) <br> * paragraph [0365] – paragraph [0370] * <br> * paragraph [0442] – paragraph [0444] * <br> * paragraph [0383] – paragraph [0385] * | 5 | |

TECHNICAL FIELDS
SEARCHED       (IPC)

H04B

The present search report has been drawn up for all claims

| Place of search | Date of completion of the search | Examiner |
|---|---|---|
| Munich | 28 August 2023 | Oana, Andrei |

EPO FORM 1503 03.82 (P04C01)

## ANNEX TO THE EUROPEAN SEARCH REPORT
## ON EUROPEAN PATENT APPLICATION NO.

EP 22 21 4543

28-08-2023

| Patent document cited in search report | | Publication date | Patent family member(s) | | Publication date |
|---|---|---|---|---|---|
| WO 2022067521 | A1 | 07-04-2022 | CN | 116326025 A | 23-06-2023 |
| | | | EP | 4223036 A1 | 09-08-2023 |
| | | | WO | 2022067521 A1 | 07-04-2022 |
| US 2022070909 | A1 | 03-03-2022 | CN | 113396619 A | 14-09-2021 |
| | | | US | 2022070909 A1 | 03-03-2022 |
| | | | WO | 2020121413 A1 | 18-06-2020 |
| US 2021352649 | A1 | 11-11-2021 | NONE | | |